# EUROPEAN PATENT APPLICATION

(11) **EP 2 015 514 A2**
(43) Date of publication of application: **14.01.2009**
(21) Application number: 08157004.6
(22) Date of filing: 27.05.2008
(51) Int. Cl.: H04L 12/28, H04L 12/56

(54) **Information processing apparatus and control method of an information processing apparatus**

(30) Priority: 22.06.2007 JP 2007165367
(71) Applicant: Kabushiki Kaisha Toshiba, Minato-ku, Tokyo 105-8001 (JP)
(72) Inventor: Takasu, Nobuaki Toshiba Corporation IP Division, Minato-ku Tokyo 105-8001 (JP)
(74) Representative: Henkel, Feiler & Hänzel

(57) **Abstract**

According to one embodiment, an information processing apparatus (1) includes a radio communication unit (17), a searching unit (17) which searches for an external device (2) with which the radio communication unit is capable of performing data transfer, a detecting unit (102) which detects all of radio communication functions provided in the external device, a monitoring unit (102) which monitors a link speed attained with respect to the external device, a determining unit (102) which determines whether or not the link speed acquired by the monitoring unit reaches a link speed which makes it possible to perform a radio communication function requiring the highest link speed among all of radio communication functions, and a control unit (102) which makes a connection to the external device unit when the determining unit determines that the link speed is reached.

## Description

One embodiment of the present invention relates to a radio communication control technique suitably applied to an information processing apparatus such as a personal computer, for example.

Recently, various types of personal computers such as notebook personal computers and desktop computers are widely used and generally come to have radio communication functions of transferring data with respect to external devices without using cables.

Data transmission/reception via a radio communication path largely depends on the environment (mainly, the distance between radio devices) on each occasion in comparison with data transmission/reception via a wired communication path. Since it is difficult for the user to grasp the situation thereof, various countermeasures against a variation in the environment are proposed so far (for example, refer to Jpn. Pat. Appln. KOKAI Publication No. 2007-6106).

Further, recently, much attention starts to be paid to a high-speed radio communication system called ultra-wideband (UWB). By utilizing UWB, not only a file transfer process by use of, for example, a wireless Universal Serial Bus (USB) function can be performed but also moving image display data which is required to be provided on the real-time basis can be supplied to an external display device by use of, for example, a wireless Digital Visual Interface (DVI) function.

The wireless USB function can be realized if a link speed of 53 Mbps can be attained and the wireless DVI function cannot be realized if a link speed of 400 Mbps or higher cannot be attained. Therefore, when radio communication devices having a plurality of radio communication functions including the wireless USB function and wireless DVI function are connected to one another, there may occur a status in which some of the radio communication functions can be used and some other radio communication functions cannot be used while the user is informed that the devices are connected.

This invention is made by taking the above situation into consideration and an object thereof is to provide an information processing apparatus which is adequately connected with or disconnected from an external device including a plurality of radio communication functions and a control method thereof.

In order to attain the above object, an information processing apparatus of the invention includes radio communication means, searching means for searching for an external device with which the radio communication means is capable of performing data transfer, detecting means for detecting all of radio communication functions provided in the external device searched for by the searching means, monitoring means for monitoring a link speed attained with respect to the external device searched for by the searching means, determining means for determining whether or not the link speed acquired by the monitoring means reaches a link speed which makes it possible to perform a radio communication function requiring the highest link speed among all of radio communication functions detected by the detecting means, and control means for making a connection to the external device searched for by the searching means when the determining means determines that the link speed is reached.

The invention can be more fully understood from the following detailed description when taken in conjunction with the accompanying drawings, in which:
FIG. 1 is an exemplary diagram showing a configuration of an information processing apparatus (personal computer) according to an embodiment of the invention;
FIG. 2 is an exemplary flowchart showing the flow of an operation performed by the personal computer of the embodiment when an external device is connected thereto; and
FIG. 3 is an exemplary flowchart showing the flow of an operation performed by the personal computer of the embodiment after an external device is connected thereto.

Various embodiments according to the invention will be described hereinafter with reference to the accompanying drawings.

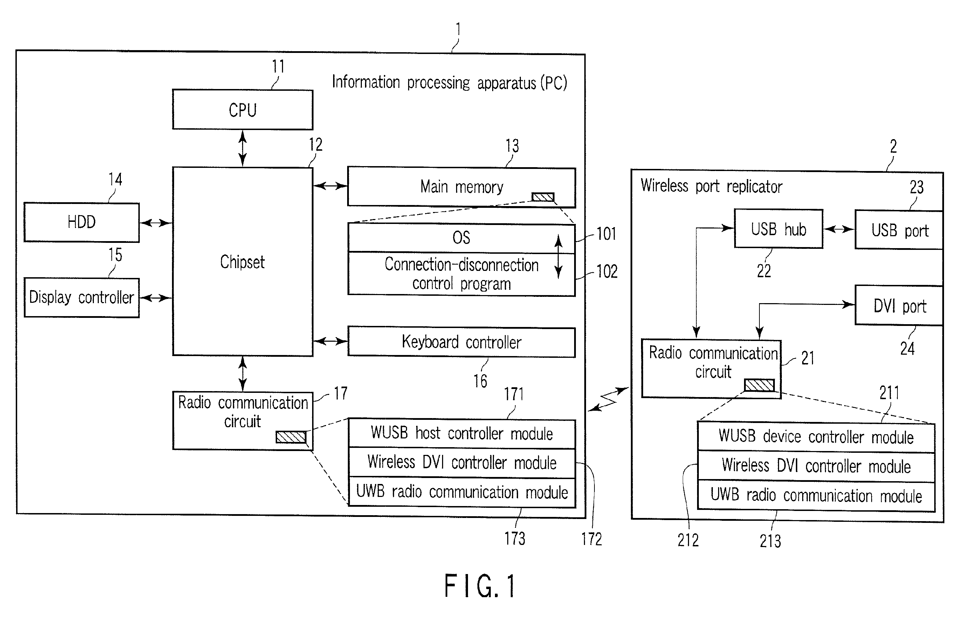

FIG. 1 is an exemplary diagram showing a configuration of an information processing apparatus 1 according to the embodiment. For example, the information processing apparatus 1 is realized as a notebook personal computer (PC) and is designed to be wireless-connected to a wireless port replicator 2 as required.

As shown in FIG. 1, the PC 1 includes a CPU 11, chipset 12, main memory 13, hard disk drive device (HDD) 14, display controller 15, keyboard controller 16 and radio communication circuit 17.

The CPU 11 is a processor which generally controls the whole operation of the PC 1 and executes various programs stored in the main memory 13 such as an operating system (OS) 101 and a connection-disconnection control program 102 as will be described later. The chipset 12 is a circuit which relays communication between the CPU 11 and the other portions. For this purpose, the chipset 12 contains various controllers to drive and control the respective portions.

The main memory 13 is a storage device used as a main storage of the PC 1 and stores various programs executed by the CPU 11 and various data items used in the programs. Further, the HDD 14 is a storage device used as an external storage of the PC 1 and stores a large amount of various data items and various programs as an auxiliary storage device of the main memory 13.

The display controller 15 controls the output side portion of a user interface provided by the PC 1 and display-controls picture data generated by the CPU 11 on a display. Further, the keyboard controller 16 controls the input side portion of the user interface provided by the PC 1 and transmits the operation by a keyboard or mouse to the CPU 11. In addition, the radio communication circuit 17 performs a high-speed radio communication of the UWB system.

The radio communication circuit 17 includes a wireless USB host controller module 171, wireless DVI controller module 172 and UWB radio communication module 173. The UWB radio communication module 173 is a module which forms a UWB radio communication physical layer. Both of the wireless USB host controller module 171 and wireless DVI controller module 172 perform radio communications by use of the UWB radio communication physical layer formed by the UWB radio communication module 173. The wireless USB host controller module 171 provides a wireless USB function and the wireless DVI controller module 172 provides a wireless DVI function.

The wireless USB function can be realized if a link speed of 53 Mbps can be attained and the wireless DVI function cannot be realized if a link speed of 400 Mbps or higher cannot be attained. The connection-disconnection control program 102 performs a control operation so as not to incur a situation in which one of the functions (in this example, the function provided by the wireless USB host controller module 171) can be utilized but the other function (in this example, the function provided by the wireless DVI controller module 171) cannot utilized while the PC is being connected to the wireless port replicator 2. This is explained in more detail below.

Also, in this case, the configuration of the wireless port replicator 2 is simply explained. As shown in FIG. 1, the wireless port replicator 2 includes a radio communication circuit 21, USB hub 22, USB port 23 and DVI port 24. For example, if a USB device is attached to the USB port 23 of the wireless port replicator 2 and an external display device with DVI terminals is connected to the DVI port 24 via a cable, it becomes possible for the PC 1 to transfer files with respect to the USB device and supply moving image display data to the external display device without using a cable.

It is now assumed that the user performs an operation of connecting the wireless port replicator 2 to the PC 1 on the PC 1 in a state in which a certain distance is provided between the PC 1 and the wireless port replicator 2 so that file transfer can be effected with respect to the USB device attached to the USB port 23 but moving image display data cannot be supplied to the external display device connected to the cable-connected to the DVI port 24.

If the above operation is performed, the radio communication circuit 17 of the PC 1 searches for an external device (radio communication device) existing in the surrounding area. In this case, since a state is assumed in which a link speed permitting the wireless USB function to be performed is attained, the wireless port replicator 2 is detected.

If the wireless port replicator 2 is detected, the radio communication circuit 17 transmits or receives control information with respect to the radio communication circuit 21 of the wireless port replicator 2. In the control information, information indicating the type of radio communication function provided in the wireless port replicator 2 is contained. Detection of the wireless port replicator 2 by the radio communication circuit 17 is transmitted to the connection-disconnection control program 102. If the connection-disconnection control program 102 receives the transmitted detection result, it detects all of the radio communication functions provided in the wireless port replicator 2 based on control information on the wireless port replicator 2 side acquired by the radio communication circuit 17.

Further, the radio communication circuit 17 includes a function of adjusting the link speed to acquire the highest communication speed under a condition that the communication quality of a preset level or higher level is assured. The connection-disconnection control program 102 always monitors the link speed which dynamically varies. Then, the connection-disconnection control program 102 checks whether or not the link speed attained at this time has reached a link speed which makes it possible to perform the radio communication function requiring the highest link speed among all of the radio communication functions provided in the wireless port replicator 2. In this example, since a status is assumed in which the link speed which permit the wireless DVI function to be performed cannot be attained, it is determined that the link speed attained at this time has not reached a link speed which makes it possible to perform the radio communication function requiring the highest link speed among all of the radio communication functions provided in the wireless port replicator 2.

When the link speed attained at this time reaches the link speed which makes it possible to perform the radio communication function requiring the highest link speed among all of the radio communication functions provided in the wireless port replicator 2, the connection-disconnection control program 102 informs the OS 101 that the wireless port replicator 2 is connected. As a result, the radio communication by an application program or the like executed under the control of the OS 101 is started. Therefore, in this example, no information is given to the OS 101 and the radio communication by an application program or the like executed under the control of the OS 101 is not started.

That is, the OS 101 recognizes a state in which the wireless port replicator 2 is being connected to the PC only in a status in which both of the wireless USB function and wireless DVI function can be performed with respect to the wireless port replicator 2 and the PC 1 does not provide a status in which only one of the functions can be performed.

Further, in a status in which the link speed which makes it possible to perform the radio communication function requiring the highest link speed among all of the radio communication functions provided in an external device detected by the searching operation (that is, the wireless port replicator 2) cannot be attained, the connection-disconnection control program 102 outputs a message urging to approach the searched external device via the display controller 15. By outputting the message, the reason why the connection is not established can be reported and the link speed may be improved.

By outputting the message or originally, the distance between the PC 1 and the wireless port replicator 2 is set to a distance which can permit moving image display data to be supplied to the external display device cable-connected to the DVI port 24 and the connection-disconnection control program 102 continuously monitors the link speed even after connection of the wireless port replicator 2 is reported to the OS 101. Then, if the link speed becomes lower than the link speed which makes it possible to perform the radio communication function requiring the highest link speed among all of the radio communication functions provided in the wireless port replicator 2, disconnection of the wireless port replicator 2 is reported to the OS 101 even if the other radio communication functions can be performed. That is, the OS 101 can continuously recognize a state in which the wireless port replicator 2 is being connected only in a status in which both of the wireless USB function and wireless DVI function can be performed with respect to the wireless port replicator 2 and the PC 1 does not provide a status in which only one of the functions can be performed.

Then, at this time, the connection-disconnection control program 102 reports to the effect that the external device which is kept connected so far is disconnected and outputs a message urging to approach the external device via the display controller 15. By outputting the message, the fact of disconnection and the reason why the disconnection is effected can be reported and the link speed may be improved.

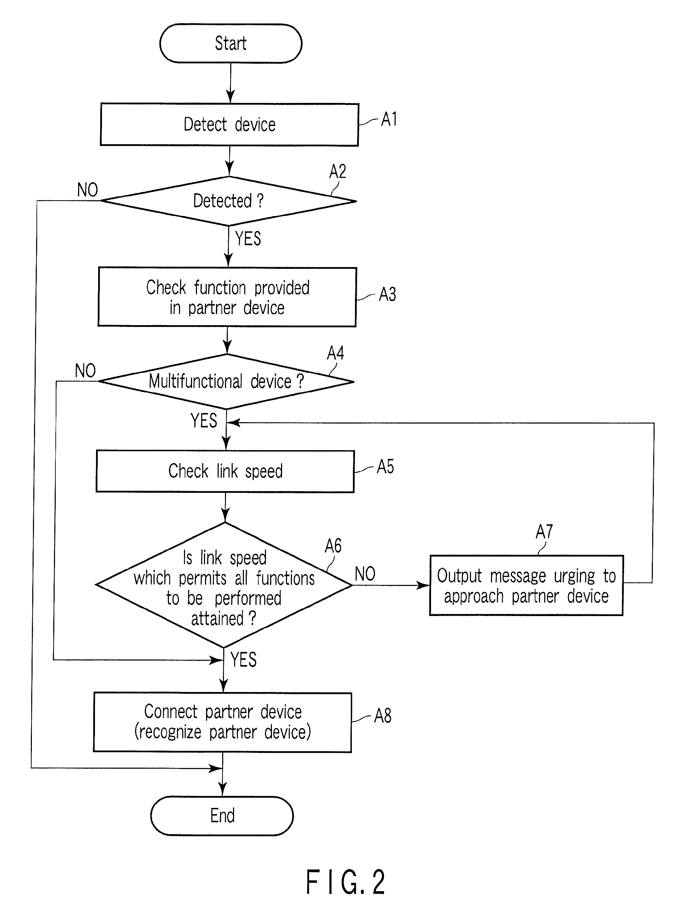

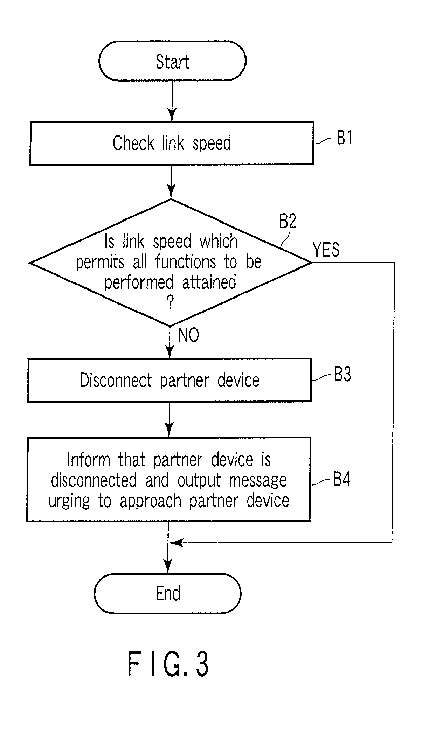

Next, the connection-disconnection control procedure for the radio communication performed by use of the PC 1 is explained with reference to FIGS. 2 and 3. FIG. 2 is an exemplary flowchart showing the flow of an operation performed at the time of connection of the wireless port replicator 2.

When the external device including the wireless port replicator 2 is connected, first, an external device existing in the surrounding area is searched for (block A1) and if the external device is detected (YES in block A2), the radio communication function provided in the detected external device is checked (block A3). If the external device is not a multifunctional device having a plurality of radio communication functions (NO in block A4), the single radio communication function can be performed and the external device is detected by the searching operation by use of the radio communication function, and therefore, connection to the external device at this time point is established (block A8).

If the searched external device is a multifunctional device (YES in block A4), the link speed is checked (block A5) and whether or not the link speed set at this time has reached a link speed which makes it possible to perform a radio communication function requiring the highest link speed among all of the radio communication functions is determined (block A6). If the above link speed is not reached (NO in block A6), a message urging to approach the external device is output (block A7). If the above link speed is reached (YES in block A6), the PC is connected to the external device (block A8).

FIG. 3 is an exemplary flowchart showing the flow of an operation performed after the PC 1 is connected to the wireless port replicator 2.

After connection to the wireless port replicator 2, the link speed is continuously checked (block B1) and whether or not the link speed set at this time has reached a link speed which makes it possible to perform a radio communication function (when only one radio communication function is provided, it is the radio communication function) requiring the highest link speed among all of the radio communication functions is determined (block B2).

If the link speed is lower than a link speed which makes it possible to perform the radio communication function requiring the highest link speed among all of the radio communication functions (NO in block B2), the PC 1 is disconnected from the external device (block B3). Then, the PC 1 reports to the effect that the external device is disconnected and outputs a message urging to approach the external device (block B4).

Thus, according to the PC 1, it is possible to adequately perform the connection and disconnection operations with respect to the external device having a plurality of radio communication functions so as not to provide a state in which some functions can be used but the other functions cannot be used.

In the above embodiment, the example in which the radio communication function provided in the external device is detected based on control information of the searched external device is explained. However, for example, it is possible to previously store information of a multifunctional device which is to be connected and perform the connection-disconnection control operation based on the stored information only for the external device in which the information is stored.

## Claims

1. An information processing apparatus, **characterized by** comprising:
radio communication means (17);
searching means (17) for searching for an external device with which the radio communication means is capable of performing data transfer;
detecting means (102) for detecting all of radio communication functions provided in the external device searched for by the searching means;
monitoring means (102) for monitoring a link speed attained with respect to the external device searched for by the searching means;
determining means (102) for determining whether or not the link speed acquired by the monitoring means reaches a link speed which makes it possible to perform a radio communication function requiring the highest link speed among all of radio communication functions detected by the detecting means; and
control means (102) for making a connection to the external device searched for by the searching means when the determining means determines that the link speed is reached.

2. The information processing apparatus according to claim 1, **characterized in that** the control means outputs a message urging to approach the external device searched for by the searching means when the determining means determines that the highest link speed is not reached.

3. The information processing apparatus according to claim 1, **characterized in that** the control means disconnects the external device searched for by the searching means when the determining means determines that the highest link speed is not reached after connection to the external device.

4. The information processing apparatus according to claim 3, **characterized in that** the control means reports to the effect that the external device is disconnected and outputs a message urging to approach the external device when the external device is disconnected.

5. A control method of an information processing apparatus including radio communication means, the method **characterized by** comprising:
detecting (A3) all of radio communication functions provided in an external device which is to be connected;
determining (A5) whether or not a link speed attained with respect to the external device reaches a link speed which makes it possible to perform a radio communication function requiring the highest link speed among all of the detected radio communication functions; and
making (A8) a connection to the external device when it is determined that the highest link speed is reached.

6. The control method according to claim 5, **characterized by** further comprising outputting (A7) a message urging to approach the external device when it is determined that the highest link speed is not reached.

7. The control method according to claim 5, **characterized by** further comprising disconnecting (B3) the external device when the link speed attained with respect to the external device becomes lower than the highest link speed after the external device is connected.

8. The control method according to claim 7, **characterized in that** the disconnecting further including reporting (B4) to the effect that the external device is disconnected and outputting a message which urges to approach the external device when the external device is disconnected.
